Europäisches Patentamt

European Patent Office

Office européen des brevets

(11) Numéro de publication : **0 084 010**
**B1**

## FASCICULE DE BREVET EUROPÉEN

(45) Date de publication du fascicule du brevet :
15.03.89

(51) Int. Cl.⁴ : **B 60 N 1/00**, B 60 R 21/04

(21) Numéro de dépôt : **83400047.3**

(22) Date de dépôt : **10.01.83**

(54) **Siège pour véhicule.**

(30) Priorité : **11.01.82 FR 8200548**

(43) Date de publication de la demande :
**20.07.83 Bulletin 83/29**

(45) Mention de la délivrance du brevet :
**15.03.89 Bulletin 89/11**

(84) Etats contractants désignés :
**DE GB IT**

(56) Documents cités :
**DE--A-- 1 814 684**
**FR--A-- 2 391 893**
**GB--A-- 1 065 315**

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Harmand, Michel**
**3, avenue Saint Exupéry**
**F-92360 Meudon-la-Forêt (FR)**

(74) Mandataire : **Boivin, Claude**
**9, rue Edouard-Charton**
**F-78000 Versailles (FR)**

Jouve, 18, rue St-Denis, 75001 Paris, France

**Description**

Les sièges avant d'un véhicule automobile sont souvent disposés de part et d'autre d'une console centrale sur laquelle les organes de commande ou de contrôle peuvent être montés.

Les assises de ces sièges comportent généralement des flancs ou bourrelets latéraux souples en saillie par rapport à la surface d'assise, de manière à maintenir l'usager et à améliorer son confort. Il existe alors entre le flanc intérieur du siège et la paroi latérale adjacente de la console une fosse qui peut être la cause de perte d'objets difficilement récupérables ou l'origine de fractures en cas de tonneaux, si la main ou le pied de l'usager vient à s'y glisser. Cette fosse est, de plus, inesthétique.

Le brevet DE-A-1 814 684 décrit un siège dont l'assise recouvre le tunnel de passage de l'arbre de transmission vers le pont arrière. Comme un tel tunnel est inesthétique, les deux assises sont pratiquement au contact l'une de l'autre de sorte que le tunnel n'est pratiquement pas visible. Il n'est pas prévu de console et un jeu relativement important existe entre la base de l'assise et le tunnel qui se trouve sensiblement à hauteur des glissières, afin de permettre à l'assise de coulisser par rapport au tunnel.

La présente invention a pour objet un siège pour véhicule comportant une console centrale, qui permet de supprimer la fosse et remédie ainsi aux inconvénients ci-dessus.

Le siège selon l'invention est caractérisé en ce que au moins une partie de son bourrelet intérieur est indépendante de l'assise du siège et fixée sur la paroi latérale adjacente de la console.

Le bourrelet intérieur peut n'être indépendant qu'en partie de l'assise, c'est-à-dire comporter une portion solidaire de l'assise et une portion solidaire de la console. Mais il est facile de les rapprocher suffisamment pour éviter pratiquement la formation d'une fosse.

Le bourrelet intérieur peut également être totalement indépendant de l'assise et être fixé sur la paroi latérale de la console de manière à recouvrir le bord latéral intérieur de la surface d'assise. Toute fosse est alors supprimée.

Il est avantageux, en particulier dans le cas d'un siège réglable en translation, que le bourrelet intérieur ait une longueur supérieure à celle du siège et s'étende pratiquement sur toute la longueur de la console. Le siège comporte ainsi un bourrelet intérieur, quelle que soit sa position. En outre, l'esthétique et le confort sont améliorés.

Il est également avantageux que le bourrelet intérieur s'étende en hauteur au-dessus de la console. En effet, dans ce cas, il protège les organes de commande ou de contrôle qui sont portés par cette console et sont ainsi partiellement encastrés.

On a décrit ci-après, à titre d'exemple non limitatif, divers modes de réalisation du siège selon l'invention, avec référence aux dessins annexés dans lesquels :

La Figure 1 est une vue en perspective des sièges avant d'un véhicule automobile ;

La Figure 2 est une vue frontale de l'un des sièges de la Figure 1, l'assise étant représentée partiellement coupée ;

Les Figures 3 à 6 sont des vues semblables à la Figure 2 d'autres modes de réalisation du siège.

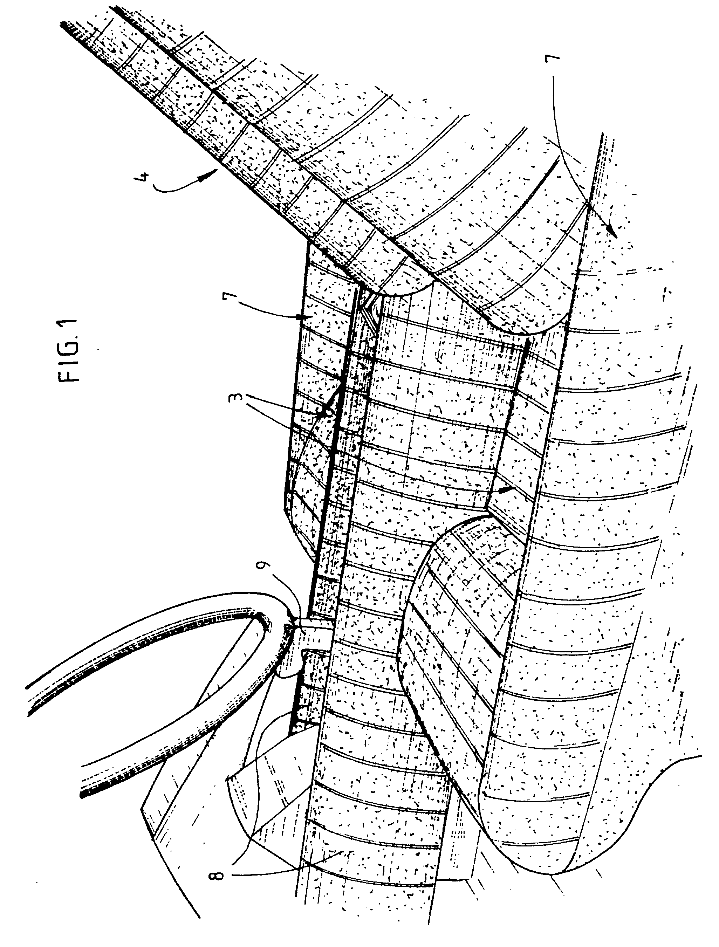

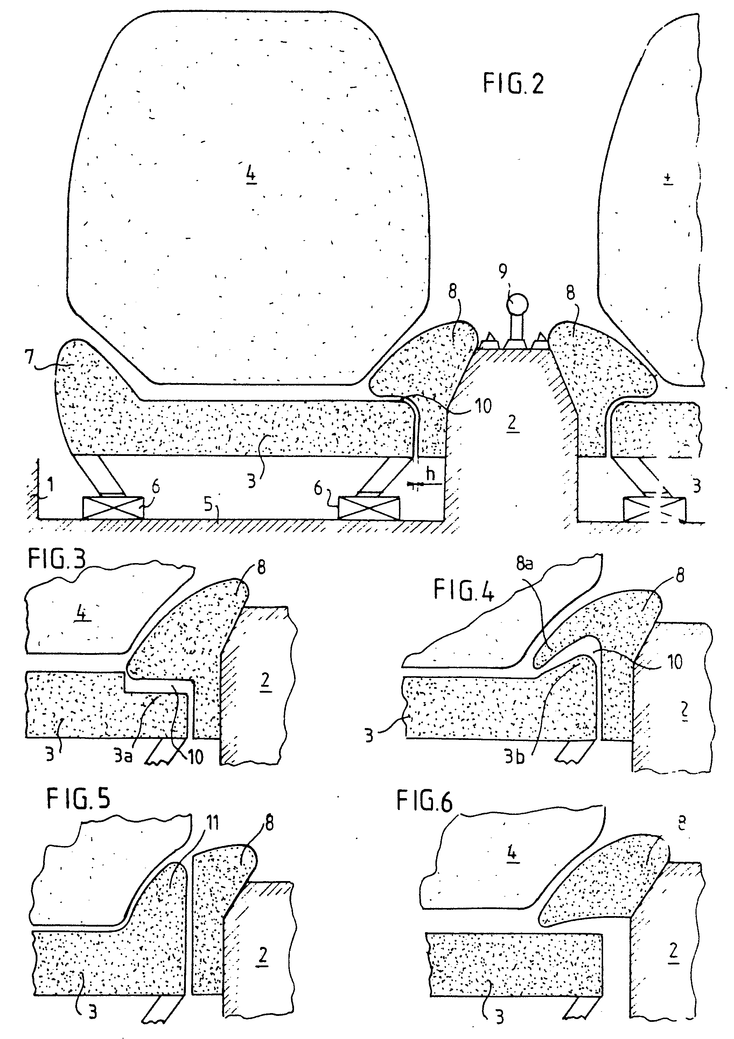

Les Figures 1 et 2 montrent les sièges avant d'un véhicule dont la caisse 1 comporte une console médiale longitudinale 2.

Chacun des sièges comporte une assise 3 et un dossier 4. L'assise 3 est montée sur le plancher 5 de la caisse 1 par l'intermédiaire d'un dispositif de translation de type connu, par exemple de glissières 6.

L'assise 3 du siège a une forme disymétrique. Elle comporte un bourrelet de maintien latéral 7 du côté extérieur du siège, c'est-à-dire du côté opposé à la console 2. De l'autre côté, il est également prévu un bourrelet de maintien latéral 8 ; mais celui-ci est indépendant de l'assise 3 et est fixé sur le flanc de la console 2.

Le bourrelet de maintien 8 fait saillie par rapport à la plage supérieure de la console 1, de sorte que les commandes 9 portées par cette console sont partiellement encastrées et protégées efficacement. Par ailleurs, ce bourrelet a une longueur supérieure à celle de l'assise 3 et s'étend pratiquement sur toute la longueur de la console de façon à compléter l'assise quelle que soit la place du siège.

Dans le mode de réalisation de la Figure 2, la partie latérale intérieure de l'assise 3 est logée dans un évidement 10 prévu dans le bourrelet 8. Le jeu h entre l'assise 3 et la paroi verticale de l'évidement est juste suffisant pour assurer la mobilité en translation du siège.

Divers modes de réalisation peuvent être prévus pour améliorer la suspension du siège et éviter les risques d'interférence entre masses en cours de débattement. C'est ainsi qu'à la Figure 3, le bourrelet 8 comporte encore l'évidement 10, mais la partie interne 3a de l'assise a une épaisseur plus faible que le restant de l'assise, afin de mieux équilibrer la réponse du coussin de cette assise. A la Figure 4, l'assise 3 comporte un embryon de bourrelet 3b qui est logé dans l'évidement 10 et n'est donc pas visible, le bourrelet 8 comportant une bavette souple 8a qui recouvre le bourrelet 3b et absorbe facilement les dispersions dimensionnelles de fabrication et de montage, sans freiner les déplacements du siège.

A la Figure 5, l'assise 3 comporte du côté de la console 2 un bourrelet partiel 11 qui est complété par le bourrelet 8 fixé à la console, le plan de séparation des deux bourrelets étant vertical. Le coussin d'assise présente ainsi un très bon équilibre.

Enfin, à la Figure 6, la partie latérale intérieure 3a de l'assise est logée sous le bourrelet 8 qui ne comporte pas l'évidement 10. La section transversale d'assise est maximale.

## Revendications

1. Siège pour véhicule comportant une console centrale (2) dont l'assise (3) comporte des bourrelets latéraux, caractérisé en ce qu'une partie (8) au moins de son bourrelet intérieur est indépendante de l'assise (3) du siège et est fixée sur la paroi latérale adjacente de la console (2).

2. Siège selon la revendication 1, caractérisé en ce que le bourrelet intérieur comporte une portion (11) solidaire de l'assise et une portion (8) solidaire de la console (2).

3. Siège selon la revendication 1, caractérisé en ce que le bourrelet intérieur (8) est totalement indépendant de l'assise (3) et est fixé sur la paroi latérale de la console (2) de manière à recouvrir le bord latéral intérieur (3a) de la surface d'assise.

4. Siège selon la revendication 3, caractérisé en ce que le bourrelet (8) comporte un évidement (10) dans lequel est logée la partie latérale intérieure (3a) de l'assise.

5. Siège selon la revendication 4, caractérisé en ce que la partie intérieure (3a) de l'assise (3) a une épaisseur plus faible que le restant de l'assise.

6. Siège selon la revendication 4, caractérisé en ce que l'assise comporte une saillie latérale (3b) logée dans l'évidement (10) et en ce que le bourrelet (8) comporte une bavette souple (8a) qui recouvre la saillie (3b).

7. Siège selon l'une des revendications 1 à 6, caractérisé en ce que le bourrelet intérieur (8) a une longueur supérieure à celle du siège et s'étend pratiquement sur toute la longueur de la console (2).

8. Siège selon l'une des revendications 1 à 7, caractérisé en ce que le bourrelet intérieur (8) s'étend en hauteur au-dessus de la console (2).

## Claims

1. A seat for a vehicle comprising a console whose seating position comprises lateral flanges, wherein at least one part of its internal flange is independent of the seating position of the seat and is secured to the adjacent lateral wall of the console.

2. A seat as claimed in claim 1, wherein the internal flange comprises a portion integral with the seat position amd a portion integral with the console.

3. A seat as claimed in claim 1, wherein the internal flange is entirely independent of the seat position and is secured to the lateral wall of the console so as to cover the internal lateral edge of the seating position surface.

4. A seat as claimed in claim 3, wherein the flange comprises a recess in which the lateral part of the seating position is housed.

5. A seat as claimed in claim 4, wherein the internal part of the seating position is less thick than the remaining part of the seating position.

6. A seat as claimed in claim 4, wherein the seating position comprises a lateral projection housed inside the recess and wherein the flange comprises a flexible flaring which covers the projection.

7. A seat as claimed in one of claims 1 to 6, wherein the internal flange is longer than the seat and extends over almost the entire length of the console.

8. A seat as claimed in one of claims 1 to 7, wherein the internal flange extends upwards above the console.

## Patentansprüche

1. Sitz für ein Fahrzeug mit einer Konsole (2) in der Mitte, bei welchem die Sitzplatte (3) seitliche Wulste aufweist, dadurch gekennzeichnet, daß mindestens ein Teil (8) ihres inneren Wulstes von der Sitzplatte (3) des Sitzes unabhängig und an der angrenzenden Seitenwand der Konsole (2) befestigt ist.

2. Sitz nach Anspruch 1, dadurch gekennzeichnet, daß der innere Wulst einen Abschnitt (11) aufweist, der kraftschlüssig mit der Sitzplatte verbunden ist, sowie einen Abschnitt (8), der kraftschlüssig mit der Konsole (2) verbunden ist.

3. Sitz nach Anspruch 1, dadurch gekennzeichnet, daß der innere Wulst (8) von der Sitzplatte (3) vollständig unabhängig und an der Seitenwand der Konsole (2) derart befestigt ist, daß er den inneren seitlichen Rand (3a) der Oberfläche der Sitzplatte überdeckt.

4. Sitz nach Anspruch 3, dadurch gekennzeichnet, daß der Wulst (8) eine Aussparung (10) aufweist, in welcher der innere seitliche Teil (3a) der Sitzplatte angeordnet ist.

5. Sitz nach Anspruch 4, dadurch gekennzeichnet, daß der innere Teil (3a) der Sitzplatte (3) eine Dicke aufweist, die geringer ist als die Dicke der restlichen Sitzplatte.

6. Sitz nach Anspruch 4, dadurch gekennzeichnet, daß die Sitzplatte einen seitlichen Vorsprung (3b) aufweist, der in der Aussparung (10) angeordnet ist und daß der Wulst (8) einen weichen Lappen (8a) besitzt, der den Vorsprung (3b) überdeckt.

7. Sitz nach einem der Ansprüche 1 bis 6, dadurch gekennzeichnet, daß der innere Wulst (8) eine Länge besitzt, die größer ist als die Länge des Sitzes und sich praktisch über die ganze Länge der Konsole (2) erstreckt.

8. Sitz nach einem der Ansprüche 1 bis 7, dadurch gekennzeichnet, daß der innere Wulst (8) sich in der Höhe über die Konsole (2) hinaus erstreckt.

FIG. 1

EP 0 084 010 B1

FIG.2

FIG.3

FIG.4

FIG.5

FIG.6